# EUROPÄISCHE PATENTANMELDUNG

(11) **EP 2 281 449 A1**
(43) Veröffentlichungstag der Anmeldung: **09.02.2011**
(21) Anmeldenummer: 09166468.0
(22) Anmeldetag: 27.07.2009
(51) Int. Cl.: A01K 1/06

(54) **Selbstfanggitter für Tiere**

(71) Anmelder: Rudolf Hörmann GmbH & Co. KG, 86807 Buchloe (DE)
(72) Erfinder: Beutlrock, Erwin, 86807, Buchloe (DE)
(74) Vertreter: Gebauer, Dieter Edmund

(57) **Zusammenfassung**

Die Erfindung betrifft ein Selbstfanggitter (1) für Tiere, mit einer Mehrzahl Fressöffnungen (35), die jeweils durch ein erstes feststehendes Gitterelement (5) und ein an einem zweiten feststehenden Gitterelement (10) schwenkbar angebrachten Fangelement (7) begrenzt sind, wobei die Fangelemente (7) jeweils durch eine Verriegelungseinrichtung (39) in einer Fangposition verriegelbar sind. In dem Selbstfanggitter (1) umfasst jedes Fangelement (7) zumindest einen parallel zur Ebene des Selbstfanggitters (1) angeordneten flächigen Wandabschnitt (23), der so bemessen ist, dass zwischen dem Fangelement (7) und dem zweiten feststehenden Gitterelement (10) geformte Zwischenräume (45,46) in jeder Schwenkposition des Fangelements (7) es nicht ermöglichen, dass ein Tier seinen Kopf hindurch stecken kann.

## Beschreibung

Die vorliegende Erfindung liegt auf dem Gebiet der Stallbautechnik und betrifft nach ihrer Gattung ein Selbstfanggitter für Tiere, welches insbesondere als Futtergitter für Rinder oder Tiere ähnlicher Größe ausgestaltet sein kann. Das Selbstfanggitter weist eine Mehrzahl Fressöffnungen auf, die jeweils durch ein erstes feststehendes Gitterelement und ein (Selbst-)Fangelement begrenzt sind. Die Fangelemente sind jeweils an einem zweiten feststehenden Gitterelement in der Ebene des Selbstfanggitters beidseitig verschwenkbar angebracht und können durch eine Verriegelungseinrichtung in einer Fangposition verriegelt werden.

### Stand der Technik

Gattungsgemäße Selbstfanggitter sind dem Fachmann als solche wohlbekannt. Sie werden zur Vereinzelung von Rindern in Rinderställen regelmäßig verbaut, beispielsweise um zu verhindern, dass während des Melkvorgangs bereits gemolkene Rinder an verschiedenen Futterplätzen Nahrung fressen. Zudem ist oft ein Anbinden ausgewählter Tiere beispielsweise für Behandlungen erforderlich, wozu sich Selbstfanggitter gut eignen.

In der Patentliteratur sind Selbstfanggitter bereits vielfach beschrieben worden. Lediglich beispielhaft sei auf das deutsche Gebrauchsmuster GM 7908179 verwiesen, in welchem ein gattungsgemäßes Selbstfanggitter beschrieben ist.

### Aufgabenstellung

Demgegenüber besteht die Aufgabe der vorliegenden Erfindung darin, ein gattungsgemäßes Selbstfanggitter für Tiere in vorteilhafter Weise weiterzubilden.

Diese Aufgabe wird nach dem Vorschlag der Erfindung durch ein Selbstfanggitter für Tiere mit den Merkmalen des unabhängigen Anspruchs gelöst. Vorteilhafte Ausgestaltungen der Erfindung sind durch die Merkmale der Unteransprüche angegeben.

Erfindungsgemäß ist ein Selbstfanggitter für Tiere, welches insbesondere als Futtergitter für Rinder oder Tiere ähnlicher Größe ausgebildet sein kann, gezeigt. Nach seiner Gattung ist das Selbstfanggitter mit einer Mehrzahl Fressöffnungen versehen, durch welche die Tiere ihren Kopf hindurch stecken müssen, um Futter von einem Futtertrog, Futtertisch oder dergleichen aufzunehmen. Die Fressöffnungen sind jeweils durch ein erstes feststehendes Gitterelement und ein schwenkbares (Selbst-)Fangelement begrenzt. Jedes Fangelement ist an einem zweiten feststehenden Gitterelement schwenkbar angebracht und kann in einer Ebene des Selbstfanggitters beidseitig um eine Schwenkachse verschwenkt werden. Zudem sind die Fangelemente durch individuelle Verriegelungseinrichtungen in einer vorbestimmten Fangposition verriegelbar. Wenn sich ein Fangelement in Fangposition befindet, können die Tiere, für die das Selbstfanggitter ausgelegt bzw. dimensioniert ist, ihren Kopf weder in eine Fressöffnung stecken noch aus dieser herausziehen.

Erfindungsgemäß umfasst jedes Fangelement zumindest einen flächigen, insbesondere geraden Wandabschnitt, der in der Ebene des Selbstfanggitters angeordnet und so bemessen ist, dass zwischen dem Fangelement und dem zweiten feststehenden Gitterelement geformte Zwischenräume in jeder Schwenkposition des Fangelements so klein sind, dass ein Tier, für welches das Selbstfanggitter ausgelegt bzw. dimensioniert ist, seinen Kopf nicht hindurch stecken kann. Durch diese Maßnahme kann in vorteilhafter Weise erreicht werden, dass ein Tier seinen Kopf lediglich in die durch das erste feststehende Gitterelement und das Fangelement begrenzte Fressöffnung stecken kann, falls sich das zugehörige Fangelement nicht in Fangsposition befindet.

Bei einer vorteilhaften Ausgestaltung des erfindungsgemäßen Selbstfanggitters sind die Fangelemente in Form von Schalenbauteilen ausgebildet und umfassen jeweils zwei in Gegenüberstellung angeordnete flächige, insbesondere gerade Wandabschnitte, die durch einen gerundeten Randabschnitt miteinander verbunden sind. Die beiden Wandabschnitte erstrecken sich in der Ebene des Selbstfanggitters und können beispielsweise symmetrisch aufgebaut sein. Insbesondere dient der Randabschnitt eines jeden Fangelements zum Begrenzen der Fressöffnungen und zum Selbstfangen der Tiere. Besonders bevorzugt ist ein solches Fangelement durch Verbiegen aus einem flachen Rohteil, welches beispielsweise aus Stahlblech besteht, hergestellt. Hierdurch kann ein besonders stabiles und in der industriellen Serienfertigung einfach und kostengünstig herzustellendes Fangelement zur Verfügung gestellt werden.

Bei einer weiteren vorteilhaften Ausgestaltung des erfindungsgemäßen Selbstfanggitters umfasst dieses entlang einer vorbestimmten Richtung (im Weiteren als "Längsrichtung" bezeichnet) sich erstreckende, dritte feststehende Gitterelemente (im Weiteren als "Längsholme" bezeichnet), die durch eine Mehrzahl vierter feststehender Gitterelemente (im Weiteren als "Querholme" bezeichnet), die sich entlang einer zur Längsrichtung senkrechten Richtung (im Weiteren als "Querrichtung" bezeichnet) erstrecken, miteinander verbunden sind. Die Längsholme sind in der Regel parallel zu einer das Selbstfanggitter tragenden Bodenfläche angeordnet und können insbesondere waagerecht angeordnet sein. In diesem Fall kann es in fertigungstechnischer Hinsicht von Vorteil sein, wenn die zweiten feststehenden Gitterelemente, welche zum Anlenken der Fangelemente dienen, jeweils in Form eines T-Trägers ausgebildet sind, wobei der T-Träger einen zwischen den beiden Längsholmen sich erstreckenden Querträgerabschnitt und einen davon senkrecht abstehenden Längsträgerabschnitt umfasst, und wobei das Fangelement an einem freien Ende des Querträgerabschnitts schwenkbar angebracht ist. In diesem Fall kann es in fertigungstechnischer Hinsicht weiterhin von Vorteil sein, wenn der wenigstens eine Wandabschnitt eines Fangelements mit zwei zumindest annähernd dreieckförmigen Bereichen versehen ist, die sich beiderseits einer Schwenkachse zum Verschwenken des Fangelements befinden.

Bei einer weiteren vorteilhaften Ausgestaltung des erfindungsgemäßen Selbstfanggitters weist jede Verriegelungseinrichtung zur Verriegelung eines Fangelements in Fangposition zwei Verriegelungsklappen auf, die mit zwei diesen zugeordneten Rastflächen so zusammenwirken können, dass ein beiderseitiges Verschwenken des Fangelements blockiert ist. Die beiden Rastflächen sind einander entgegengesetzt gerichtet. Durch diese Maßnahme kann eine einfache Verriegelung der Fangelemente in Fangposition realisiert werden. Hierbei kann es vorzuziehen sein, wenn die den Verriegelungsklappen zugeordneten Rastflächen von einem um seine Längsachse drehbar gelagerten und in wenigstens zwei Winkelstellungen feststellbaren, länglichen Betätigungselement geformt sind. Das Betätigungselement kann insbesondere eine drehbar gelagerte Betätigungsstange mit einer Mehrzahl Anbauteile wie Hülsen umfassen, wobei die den Verriegelungsklappen zugeordneten Rastflächen von Ausnehmungen der Anbauteile geformt sind. Durch diese Maßnahme können die mit den Verriegelungsklappen zusammenwirkenden Rastflächen in fertigungstechnisch besonders einfacher Weise bereitgestellt werden. Durch das Betätigungselement kann eine Verriegelung der Fangelemente in einfacher Weise herbeigeführt bzw. gelöst werden.

Bei einer weiteren vorteilhaften Ausgestaltung des erfindungsgemäßen Selbstfanggitters sind die beiden Verriegelungsklappen einer jeden Verriegelungseinrichtung an dem zumindest einen Wandabschnitt des zugehörigen Fangelements schwenkbar angebracht. Erfindungsgemäß ist es bevorzugt, wenn die beiden Verriegelungsklappen einer jeden Verriegelungseinrichtung an zwei Wandabschnitten des zugehörigen Fangelements schwenkbar angebracht sind, wodurch eine technisch besonders einfache und sichere Anlenkung der Verriegelungsklappen zur Verfügung gestellt wird.

Bei einer weiteren vorteilhaften Ausgestaltung des erfindungsgemäßen Selbstfanggitters sind jeweilige Lagerelemente zur drehbaren Lagerung des Betätigungselements so angeordnet, dass die Verriegelungsklappen einer jeden Verriegelungseinrichtung an benachbarten Lagerelementen derart zur Anlage gelangen, dass eine beiderseitige Schwenkbewegung des zugehörigen Fangelements begrenzt ist. Durch diese Maßnahme wird eine einfache Möglichkeit zur Begrenzung einer beiderseitigen Schwenkbewegung der Fangelemente geschaffen.

Bei einer weiteren vorteilhaften Ausgestaltung des erfindungsgemäßen Selbstfanggitters umgreifen die beiden flächigen Wandabschnitte eines jeden Fangelements sowohl den oberen Längsholm als auch den unteren Längsholm des Selbstfanggitters. Durch diese Maßnahme können von den Tieren auf die Fangelemente ausgeübte Kräfte in einfacher Weise zuverlässig und sicher in das Selbstfanggitter eingeleitet werden.

Bei einer weiteren vorteilhaften Ausgestaltung des erfindungsgemäßen Selbstfanggitters ist eine den Fangelementen jeweils zugeordnete Einrichtung zur Einzelverriegelung des Fangelements vorgesehen. Diese Einrichtung zur Einzelverriegelung kann beispielsweise zwei zueinander fluchtend angeordnete erste Bohrungen der beiden flächigen Wandabschnitte eines Fangelements und eine in Fangposition zu den ersten Bohrungen fluchtende zweite Bohrung eines feststehenden Gitterelements umfassen, die durch ein weiteres Arretiermittel, wie ein Stift, Splint oder dergleichen durchsetzt werden können. Alternativ könnten Klemmkeile oberhalb und unterhalb der Schwenkachse eines Fangelements zwischen den flächigen Wandabschnitten und dem zweiten feststehenden Gitterelement eingesetzt werden. Durch eine solche Einrichtung zur Einzelverriegelung können Tiere selektiv angebunden bleiben bzw. werden, um beispielsweise Behandlungen durchzuführen.

### Ausführungsbeispiel

Die Erfindung wird nun anhand eines Ausführungsbeispiels näher erläutert, wobei Bezug auf die beigefügten Zeichnungen genommen wird. Es zeigen
- Fig. 1: eine schematische perspektivische Ansicht ei- nes Ausführungsbeispiels des erfindungsgemäßen Selbstfanggitters;
- Fig. 2A-2B: jeweils vergrößerte Darstellungen der Einrich- tung zum Verriegeln eines Fangelements des Selbstfanggitters von Fig. 1 in verschiedenen Arbeitsstellungen;
- Fig. 3: eine Aufsicht auf ein Rohteil zur Formung des Fangelements des Selbstfanggitters von Fig. 1;
- Fig. 4: ein aus dem Rohteil von Fig. 3 geformtes Fang- element des Selbstfanggitters von Fig. 1.

Es sei darauf hingewiesen, dass im Folgenden gemachte Lage- und Richtungsangaben, wie "oben", "unten", "seitlich", "längs", "quer", "links", "rechts", "mittig" usw. sich auf das in den Figuren veranschaulichte Ausführungsbeispiel beziehen und lediglich zum Zwecke einer einfacheren Beschreibung der Erfindung dienen, wobei die Erfindung hierauf nicht eingeschränkt sein soll.

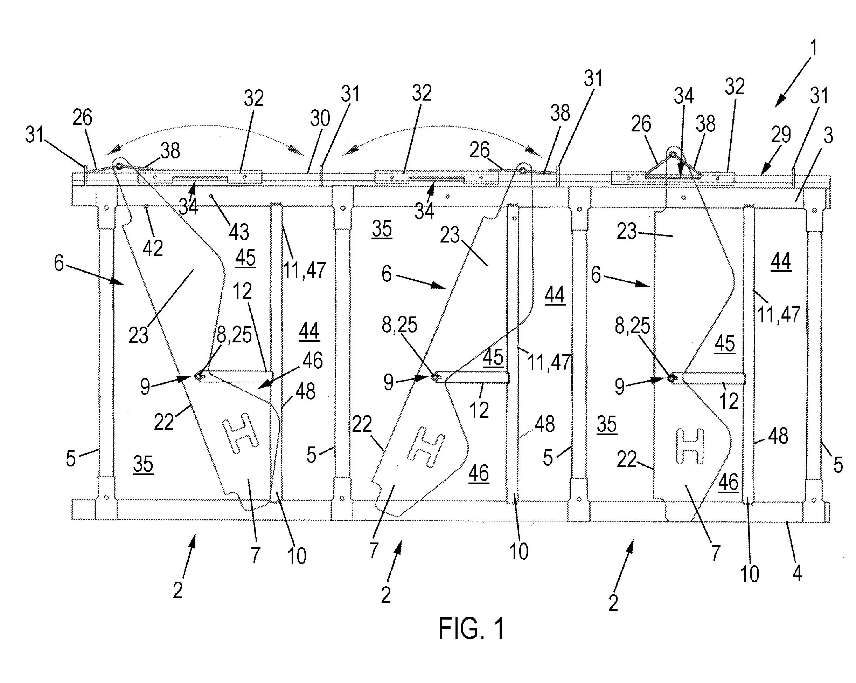

Demnach umfasst das in Fig. 1 veranschaulichte Selbstfanggitter 1, das als Futtergitter für Rinder dienen kann, eine Mehrzahl Futterplätze 2 mit Fressöffnungen 35, von denen in Fig. 1 beispielhaft drei gezeigt sind.

Das Selbstfanggitter 1 weist einen oberen Längsholm 3 und einen unteren Längsholm 4 auf, die jeweils in Form gerader Rohre ausgebildet sind und als feststehende Gitterelemente dienen. Die beiden Längsholme 3, 4 haben einen zueinander parallelen Verlauf, wobei deren Erstreckungsrichtung ("Längsrichtung") in der Regel parallel zu einer waagerechten Bodenfläche ist. Die beiden Längsholme 3, 4 sind durch in Form gerader Rohre ausgebildete Querholme 5 in einer hierzu senkrechten Richtung ("Querrichtung") miteinander verbunden, wobei die Querholme 5 mit einem gleichen Zwischenabstand angeordnet sind. In der Beschreibungseinleitung sind die Längs- und Querholme als dritte bzw. vierte feststehende Gitterelemente bezeichnet. Durch die Längs- und Querholme 3-5 wird eine Ebene des Selbstfanggitters 1 aufgespannt. Das Selbstfanggitter 1 kann über Standrohre oder andere geeignete Stützstrukturen durch Einlassen oder in anderer Weise, wie durch Verschraubung, im Boden oder einer Erhöhung verankert sein, was in den Figuren nicht näher dargestellt ist.

Im Selbstfanggitter 1 ist zwischen zwei einander benachbarten Querholmen 5 jeweils ein Futterplatz 2 vorgesehen, wobei jedem Futterplatz 2 eine separate Fangeinrichtung 6 zugeordnet ist. Im Einzelnen umfasst jede Fangeinrichtung 6 ein Fangelement 7 und einen an das Fangelement 7 unmittelbar angrenzenden Querholm 5 (in der Beschreibungseinleitung als erstes feststehendes Gitterelement bezeichnet), wobei durch das Fangelement 7 und den Querholm 5 die zugehörige Fressöffnung 35 begrenzt wird. Die Fangelemente 7 sind jeweils zwischen zwei Querholmen 5 an einem in T-Form ausgebildeten Träger 10 (in der Beschreibungseinleitung als zweites feststehendes Gitterelement bezeichnet) schwenkbar angebracht. Jeder Träger 10 ist aus einem sich parallel zu den Querholmen 5 erstreckenden und die beiden Längsholme 3, 4 miteinander verbindenden Querträgerabschnitt 11 und einem sich parallel zu den Längsholmen 3, 4 erstreckenden Längsträgerabschnitt 12 zusammengesetzt, wobei der Längsträgerabschnitt 12 etwas unterhalb der Mitte des Querträgerabschnitts 11 mit diesem verbunden ist. Der Querträgerabschnitt 11 und der Längsträgerabschnitt 12 sind hier in Form von Rohren ausgebildet, wobei der Längsträgerabschnitt 12 beispielsweise durch eine Schweißverbindung am Längsträgerabschnitt 11 befestigt ist. Alternativ könnte der Längsträgerabschnitt 12 auch durch jede andere geeignete Befestigungstechnik am Querträgerabschnitt 11 befestigt sein.

Die Fangelemente 7 sind an den freien Enden der Längsträgerabschnitte 12 in Schwenklager 9 angelenkt, wobei die Längsträgerabschnitte 12 jeweils so bemessen sind, dass sich die Schwenklager 9, bezogen auf die Längsrichtung, in etwa in der Mitte zwischen den benachbarten Querholmen 5 befinden. Jedes Schwenklager 9 hat eine zur Ebene des Selbstfanggitters 1 senkrechte Schwenkachse, im Weiteren als "erste Schwenkachse 8" bezeichnet, so dass die Fangelemente 7 jeweils in der Ebene des Selbstfanggitters 1 verschwenkt werden können.

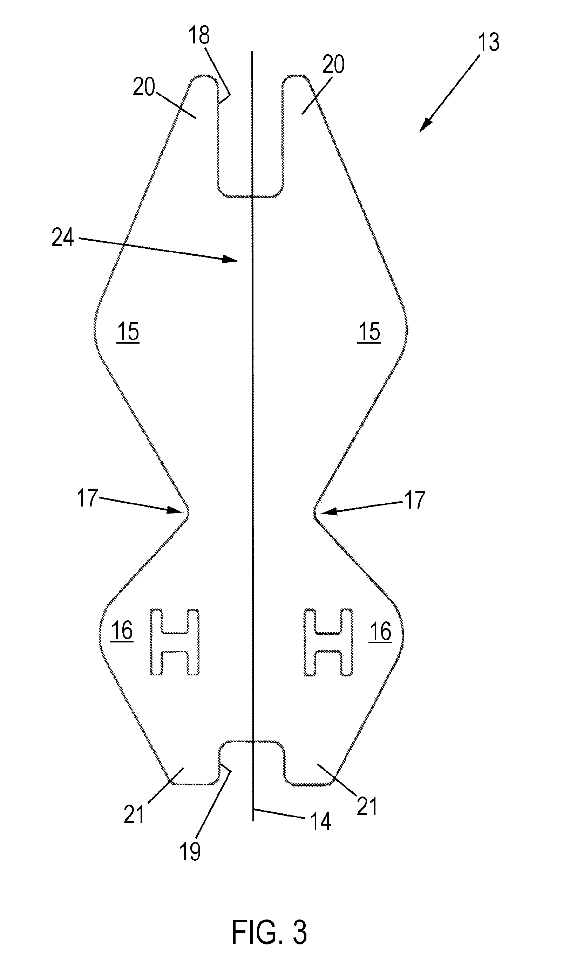

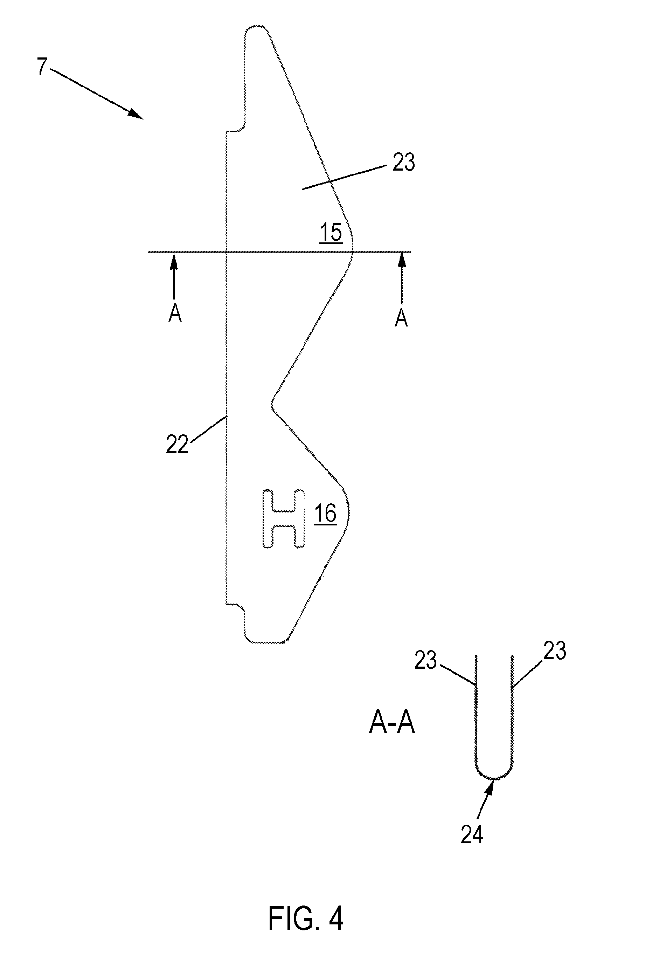

Jedes Fangelement 7 ist als einstückiges (monolithisches) Schalenbauteil ausgebildet. Es umfasst zwei einander gegenüberliegende flächige (gerade) Wandabschnitte 23 in der Ebene des Selbstfanggitters 1, die über einen gerundeten Randabschnitt 22 miteinander verbunden sind. Wie in Fig. 3 und Fig. 4 veranschaulicht ist, werden die Fangelemente 7 jeweils aus einem flächigen Rohteil 13 aus beispielsweise Stahlblech mit einer Blechstärke von einigen Millimetern hergestellt. Das Rohteil 13 kann durch Laserschneiden oder eine andere geeignete Schneid- oder Stanztechnik aus einer Stahlblechplatte herausgeschnitten sein. Es weist eine symmetrische "Schmetterlingsform" auf, wobei es spiegelsymmetrisch bezüglich einer Mittelachse 14 gestaltet ist.

Die im Folgenden gemachten Lage- und Richtungsangaben für das Rohteil 13 beziehen sich auf die Einbaulage im Selbstfanggitter 1 des hieraus hergestellten Fangelements 7.

Im Einzelnen umfasst das Rohteil 13 auf beiden Seiten der Mittelachse 14 jeweils einen seitlich (d. h. in einer zur Mittelachse 14 senkrechten Richtung) vorspringenden oberen Wandabschnittsbereich 15 und einen seitlich vorspringenden unteren Wandabschnittsbereich 16, die an einer gemeinsam geformten Einsenkung 17 ineinander übergehen. Sowohl der obere Wandabschnittsbereich 15 als auch der untere Wandabschnittsbereich 16 haben jeweils eine gerundete Dreiecksform.

Das Rohteil 13 ist weiterhin im oberen Randbereich mit einer oberen Aussparung 18 und im unteren Randbereich mit einer unteren Aussparung 19 versehen. Die beiden Aussparungen 18, 19 haben jeweils eine gerundete Rechteckform und sind zur Mittelachse 14 spiegelsymmetrisch ausgebildet, wobei die obere Aussparung 18 eine größere Abmessung entlang der Mittelachse 14 als die untere Aussparung 19 hat. Durch die obere Aussparung 18 ergeben sich zwei obere Vorsprünge 20, die zu den oberen Wandabschnittsbereichen 15 gehören. In entsprechender Weise ergeben sich durch die untere Aussparung 19 zwei untere Vorsprünge 21, die zu den unteren Wandabschnittsbereichen 16 gehören. Zwischen den beiden Aussparungen 18, 19 befindet sich ein symmetrisch zur Mittelachse 14 angeordneter Mittelabschnitt 24.

Das Fangelement 7 wird durch Verbiegen des flächigen Rohteils 13 im Bereich des Mittelabschnitts 24 geformt, wobei die oberen und unteren Wandabschnittsbereiche 15, 16 zur Formung der beiden Wandabschnitte 23 aus der Ebene des Rohteils 13 jeweils um ca. 90° umgebogen werden, bis sie in Gegenüberstellung gelangen. Hierbei wird der Mittelabschnitt 24 gekrümmt bis er eine gleichmäßige Rundung mit einem im Querschnitt in etwa halbkreisförmigen Profil aufweist, wodurch der gerundete Randabschnitt 22 des Fangelements 7 gebildet wird. Das aus dem Rohteil 13 durch Biegen hergestellte Fangelement 7 ist insbesondere in Fig. 4 gezeigt, wobei in der Schnittdarstellung gemäß Schnittlinie A-A die beiden gegenüberliegenden Wandabschnitte 23 und der gerundete Randabschnitt 22 erkennbar sind.

Die Fangelemente 7 sind jeweils auf Höhe ihrer Einsenkungen 17 an den Querträger 12 angelenkt, zu welchem Zweck die beiden Seitenwände 23 mit einem Rundloch versehen sind, die von einem im Längsträgerabschnitt 12 gelagerten ersten Schwenkbolzen 25 durchsetzt sind. Dabei kann der erste Schwenkbolzen 25 relativ zum Längsträgerabschnitt 12 und/oder das Fangelement 7 relativ zum ersten Schwenkbolzen 25 verschwenkbar sein. Es versteht sich, dass die Fangelemente 7 gleichermaßen durch jede andere geeignete Schwenklagerung an den Längsträgerabschnitten 12 angelenkt sein können.

Das Selbstfanggitter 1 ist weiterhin mit einem Betätigungselement 29 versehen, das eine Betätigungsstange 30 umfasst. Die Betätigungsstange 30 ist entlang des oberen Längsholms 3 in Lagerringen 31 um ihre Längsachse drehbar gelagert. Sie kann durch eine (nicht dargestellte) Handhabe, die an einem Ende der Betätigungsstange 30 mit dieser drehfest verbunden ist, um ihre Längsachse gedreht und durch einen Feststellmechanismus in zwei um 180° gegeneinander versetzte Winkel- bzw. Drehstellungen wahlfrei festgestellt werden. Als Handhabe kann beispielsweise ein (nicht dargestellter) Stellhebel vorgesehen sein, der aus einer Ruhestellung, in der er sich in Längsrichtung der Betätigungsstange 30 erstreckt, in eine hierzu senkrechte Arbeitsstellung zum Drehen der Betätigungsstange 30 verschwenkt werden kann. Zum Feststellen der Betätigungsstange 30 in einer der beiden Winkelstellungen kann der Stellhebel beispielsweise in eine Raste eingeschwenkt werden.

Auf die Betätigungsstange 30 sind eine Mehrzahl rohrstückförmiger Hülsen 32 aufgeschoben, die über Befestigungsschrauben 33 dreh- und verschiebefest mit der Betätigungsstange 30 verbunden sind. Alternativ können die Hülsen 32 durch jedes andere geeignete Befestigungsmittel mit der Betätigungsstange 30 dreh- und verschiebefest verbunden sein.

Jede Hülse 32 ist einem separaten Futterplatz 2 zugeordnet und innerhalb fluchtender Verlängerungen der zugehörigen Querholme 5 an der Betätigungsstange 30 befestigt. Sie sind jeweils mit einer in Aufsicht zumindest annähernd reckförmigen Ausnehmung 34 versehen, innerhalb derer die Betätigungsstange 30 freiliegt. Im Einzelnen weist jede Ausnehmung 34 eine erste Rastfläche 36 und eine zweite Rastfläche 37 auf, die von der Hülsenwand geformt und senkrecht zur Längsrichtung des Betätigungselements 30 angeordnet sind. Die beiden Rastflächen 36, 37 sind einander entgegengesetzt gerichtet. In Umfangsrichtung der Hülsen 32 haben die Ausnehmungen 34 eine zueinander gleiche Orientierung bzw. Winkelstellung, d. h. sie weisen keinen Winkelversatz auf. Insbesondere kann die Betätigungsstange 30 in einer ersten Winkel- bzw. Drehstellung, bei der die Ausnehmungen 34 der Hülsen 32 alle nach oben zeigen, sowie in einer zweiten Winkelstellung, bei der die Ausnehmungen 34 der Hülsen 32 alle nach unten zeigen, wahlfrei festgestellt werden.

Im eingebauten Zustand umgreifen die beiden unteren Vorsprünge 21 der Fangelemente 7 jeweils den unteren Längsholm 4 seitlich. Zudem umgreifen die beiden oberen Vorsprünge 20 der Fangelemente 7 jeweils den oberen Längsholm 3 und die darüber angeordnete Betätigungsstange 30 seitlich, wobei sie zudem die Betätigungsstange 30 mit einem gewissen Überstand überragen. Dank der beiden Aussparungen 18, 19 ist eine ungehinderte Schwenkbewegung des Fangelements 7 um die erste Schwenkachse 8 ermöglicht.

In jedem Fangelement 7 sind die beiden oberen Vorsprünge 20 durch einen zweiten Schwenkbolzen 27 miteinander verbunden, welcher sich im eingebauten Zustand oberhalb der Betätigungsstange 30 befindet. An dem zweiten Schwenkbolzen 27 sind jeweils zwei Verriegelungsklappen 26, 38 gelagert. Jede Verriegelungsklappe 26, 38 kann um eine durch den zweiten Schwenkbolzen 27 definierte zweite Schwenkachse 28 relativ zum Fangelement 7 verschwenkt werden, wobei die zweite Schwenkachse 28 senkrecht zur Ebene des Selbstfanggitters 1 gerichtet ist, so dass die Verriegelungsklappen 26, 38 in der Ebene des Selbstfanggitters 1 verschwenkbar sind. Zu diesem Zweck ist der zweite Schwenkbolzen 27 relativ zum Fangelement 7 und/oder die Verriegelungsklappen 26, 38 relativ zum zweiten Schwenkbolzen 27 verschwenkbar. Es versteht sich, dass die beiden Verriegelungsklappen 26, 38 durch jede andere geeignete Schwenklagerung an den Fangelementen 7 angelenkt sein können. Die beiden Verriegelungsklappen 26, 38 sind nebeneinander auf dem zweiten Schwenkbolzen 27 angeordnet und erstrecken sich zu beiden Seiten des zweiten Schwenkbolzens 27 bzw. zweiten Schwenkachse 28. Im Einzelnen erstreckt sich eine erste Verriegelungsklappe 26 in der einen Schwenkrichtung und eine zweite Verriegelungsklappe 38 in der anderen Schwenkrichtung des zugehörigen Fangelements 7.

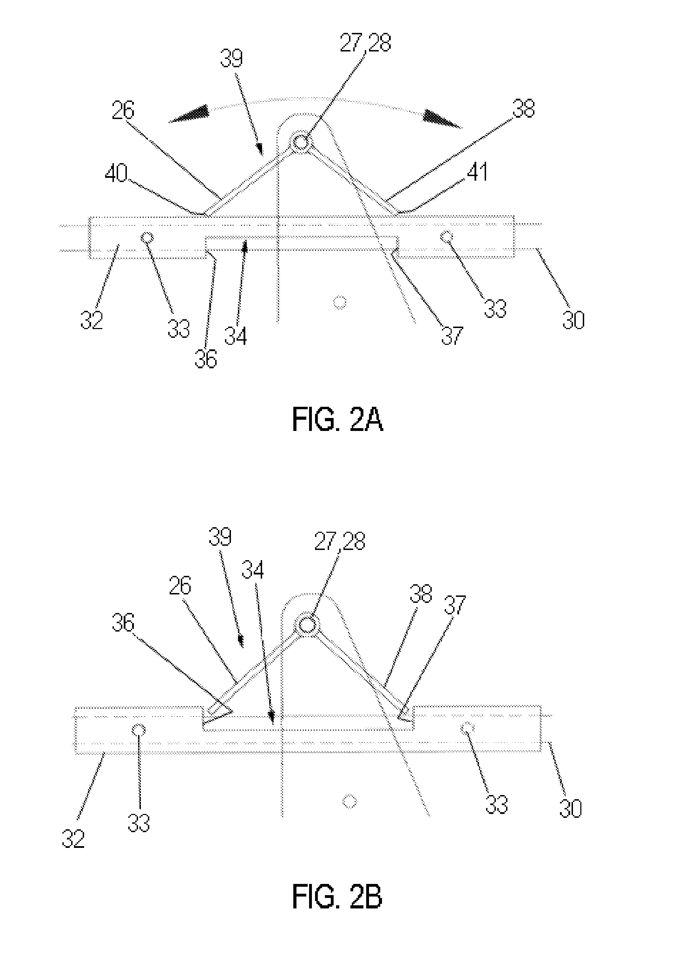

Die beiden Verriegelungsklappen 26, 38 eines jeden Fangelements 7 wirken mit einer zugehörigen Ausnehmung 34 bzw. den von dieser geformten Rastflächen 36, 37 zusammen, wodurch eine Verriegelungseinrichtung 39 für das jeweilige Fangelement 7 geschaffen wird. Das Zusammenwirken der Verriegelungsklappen 26, 38 mit den Ausnehmungen 34 ist in Fig. 1 und insbesondere in den vergrößerten Darstellungen von Fig. 2A und 2B verdeutlicht.

Bei den drei in Fig. 1 gezeigten Futterplätzen 2 bzw. Fangeinrichtungen 6 des Selbstfanggitters 1 befindet sich das Fangelement 7 bei der rechten Fangeinrichtung 6 in einer verriegelten Fangposition, bei der linken Fangeinrichtung 6 in einer gegen den Uhrzeigersinn verschwenkten, nicht verriegelten ersten Öffnungsposition und bei der mittleren Fangeinrichtung 6 in einer im Uhrzeigersinn verschwenkten, nicht verriegelten zweiten Öffnungsposition. In der Fangposition der rechten Fangeinrichtung 6 vermag ein Tier zwar seinen Hals innerhalb der Fressöffnung 35 zwischen dem Querholm 5 und dem Fangelement 7 auf und ab zu bewegen, jedoch kann es seinen Kopf nicht aus dem Selbstfanggitter 1 ziehen oder in dieses hineinstecken. Andererseits kann das Tier in den beiden Öffnungspositionen seinen Kopf in die Fressöffnung 35 zwischen Querholm 5 und Fangelement 7 hineinstecken bzw. herausziehen.

Wie in Fig. 1 für den linken und mittleren Futterplatz 2 dargestellt ist, können die Fangelemente 7 bei einer Winkelstellung des Betätigungselements 29, in der die Ausnehmungen 34 der Hülsen 32 nach unten gerichtet sind, frei zwischen den beiden Öffnungspositionen verschwenkt werden. Dies ist durch die Doppelpfeile schematisch angedeutet. Es erfolgt keine Verriegelung der Fangelemente 7 durch die Verriegelungseinrichtungen 39. Wird das Betätigungselement 29 andererseits um 180° in eine Winkelstellung gedreht, in der die Ausnehmungen 34 nach oben gerichtet sind, wie in Fig. 1 für den rechten Futterplatz 2 bzw. Fangeinrichtung 6 dargestellt ist, können die Fangelemente 7 durch die Verriegelungseinrichtung 39 in Fangposition verriegelt werden, falls durch das Tier eine entsprechende Schwenkbewegung des Fangelements 7 ausgelöst wird. Es sei darauf hingewiesen, dass die Ausnehmungen 34 aller Hülsen 32 eine zueinander gleiche Orientierung bzw. keinen Winkelversatz haben und in der Darstellung von Fig. 1 das Betätigungselement 29 lediglich zum Zwecke einer einfacheren Erläuterung der Erfindung gleichzeitig in zwei um 180° relativ zueinander verdrehten Winkelstellungen gezeigt ist.

In Fig. 2A ist eine Situation dargestellt, bei der das Betätigungselement 29 eine Winkelstellung hat, bei der die Ausnehmungen 34 nach unten orientiert sind, entsprechend dem linken und mittleren Futterplatz 2 von Fig. 1. In diesem Fall können die beiden Verriegelungsklappen 26, 38 beim Verschwenken der Fangelemente 7 über die Hülsen 32 bzw. die Betätigungsstange 30 hinweg gleiten, ohne dass die Verriegelungsklappen 26, 38 in den Ausnehmungen 34 verrasten. Somit können die Fangelemente 7 zwischen den beiden Öffnungspositionen frei hin und her verschwenkt werden. Eine Begrenzung des Schwenkhubs der Fangelemente 7 in der einen oder anderen Schwenkrichtung erfolgt durch die als Begrenzungsanschläge für die Verriegelungsklappen 26, 38 dienenden Lagerringe 31, die so platziert sind, dass ein Anschlagen der Fangelemente 7 an den benachbarten Querholmen 5 vermieden wird. Dies ist in Fig. 1 für die linke Fangeinrichtung veranschaulicht. Im Einzelnen gelangen die ersten und zweiten Verriegelungsklappen 26, 38 durch stirnseitige erste bzw. zweite Klappenenden 40, 41 zur Anlage gegen die Außenseiten der Lagerringe 31.

Demgegenüber ist in Fig. 2B eine Situation dargestellt, bei der das Betätigungselement 29 eine gegenüber der Winkelstellung von Fig. 2A um 180° verdrehte Winkelstellung hat, in der die Ausnehmungen 34 nach oben orientiert sind. In diesem Fall können die beiden Verriegelungsklappen 26, 38 der Fangelemente 7 beim Verschwenken der Fangelemente 7 in die Ausnehmungen 34 greifen, so dass die Fangelemente 7 verrasten. Wenn ein Fangelement 7 beispielsweise aus einer Position wie sie in Fig. 1 für den mittleren Futterplatz 2 gezeigt ist im Gegenuhrzeigersinn verschwenkt wird, so greift zunächst die erste Verriegelungsklappe 26 in die Ausnehmung 34 der zugehörigen Hülse 32 und gelangt schließlich mit ihrem ersten Klappenende 40 zur Anlage gegen die erste Rastfläche 36, wodurch eine weitere Schwenkbewegung in der gleichen Schwenkrichtung blockiert wird. Gleichzeitig greift die zweite Verriegelungsklappe 38 in die Ausnehmung 34 und verrastet durch Anlage ihres zweiten Klappenendes 41 an der zweiten Rastfläche 37 das Fangelement 7 in der anderen Schwenkrichtung. Somit ist eine Schwenkbewegung des Fangelements 7 sowohl in der einen Schwenkrichtung als auch in der anderen Schwenkrichtung blockiert. Andererseits, ausgehend von einer Position wie sie in Fig. 1 für den linken Futterplatz 2 gezeigt, greift beim Verschwenken des Fangelements 7 im Uhrzeigersinn zunächst die zweite Verriegelungsklappe 38 in die Ausnehmung 34 der zugehörigen Hülse 32 und gelangt schließlich mit dem zweiten Klappenende 41 zur Anlage gegen die zweite Rastfläche 37, wodurch eine weitere Schwenkbewegung in der gleichen Schwenkrichtung blockiert wird. Gleichzeitig greift die erste Verriegelungsklappe 26 in die Ausnehmung 34 und verrastet durch Anlage des ersten Klappenendes 40 an der ersten Rastfläche 36 und blockiert das Fangelement 7 in der anderen Schwenkrichtung. Somit ist eine Schwenkbewegung des Fangelements 7 sowohl in der einen Schwenkrichtung als auch in der anderen Schwenkrichtung blockiert.

Die Verriegelungseinrichtungen 39 der Fangelemente 7 können in einfacher Weise gelöst werden, indem das Betätigungselement 29 von einer Winkelstellung, bei der die Ausnehmungen 34 nach oben weisen und somit den Verriegelungsklappen 26, 38 zugewandt sind, in eine um 180° verdrehte Winkelstellung gedreht wird, bei der die Ausnehmungen 34 nach unten weisen und somit von den Verriegelungsklappen 26, 38 abgewandt sind. Bei einer solchen Drehung gelangen alle Verriegelungsklappen 26, 38 aus den Ausnehmungen 34, so dass die Fangelemente 7 zum Verschwenken freigegeben werden. Die Ausnehmungen 34 können zu diesem Zweck mit entsprechenden Anschrägungen versehen sein, was in den Figuren nicht näher dargestellt ist.

Über das Betätigungselement 29 können alle Verriegelungseinrichtungen 39 der Fangelemente 7 gemeinsam betätigt werden. Für den Fall, dass bestimmte Fangelemente 7 in Fangposition verbleiben sollen, sind die beiden flächigen (geraden) Wandabschnitte 23 der Fangelemente 7 jeweils mit fluchtenden ersten Bohrungen 42 versehen, die sich in Fangposition in Gegenüberstellung zu einer zweiten Bohrung 43 des oberen Längsholms 3 befinden. Wird ein die ersten und zweiten Bohrungen 42, 43 überbrückendes Fixierelement, beispielsweise ein in Form eines Stifts ausgebildeter Splint, eingesetzt, können die jeweiligen Fangelemente 7 in Fangposition fixiert werden, so dass beim Drehen des Betätigungselements 29 nur die übrigen Fangelemente 7 freigegeben werden. Denkbar wäre auch, anstellen dessen jeweils einen Klemmkeil oberhalb und unterhalb der ersten Schwenkachse 8 zwischen dem Fangelement 7 und dem Längsträger 11 einzusetzen, um auf diese Weise eine Schwenkbewegung des Fangelements 7 zu blockieren. Blockierte Fangelemente 7 können anschließend durch Entfernen des Fixierelements bzw. der Klemmkeile individuell freigegeben werden.

In dem in den Figuren veranschaulichten Selbstfanggitter 1 ist jeder Futterplatz 2 so gestaltet, dass ein Tier seinen Kopf ausschließlich durch die Fressöffnung 35 in das Selbstfanggitter 1 hineinstecken kann. Zu diesem Zweck haben die Querträgerabschnitte 11 jeweils einen solchen Abstand vom benachbarten Querholm 5, dass der hierbei geformte Zwischenraum, hier als "erster Zwischenraum 44" bezeichnet, so bemessen ist, dass ein Tier, für das das Selbstfanggitter 1 ausgelegt ist, seinen Kopf nicht hindurch stecken kann. Zudem ist ein Zwischenraum zwischen dem Fangelement 7 und einem oberhalb des Längsträgerabschnitts 12 befindlichen, oberen Teil 47 des Querträgerabschnitts 11, hier als "zweiter Zwischenraum 45" bezeichnet, so bemessen, dass ein Tier, für das das Selbstfanggitter 1 ausgelegt ist, seinen Kopf nicht hindurch stecken kann, was durch die oberen Wandabschnittsbereiche 15 der Wandabschnitte 23 erreicht wird. Dies gilt insbesondere auch für eine Schwenkstellung eines Fangelements 7, wie sie im linken Futterplatz 2 von Fig. 1 veranschaulicht ist. Andererseits ist ein Zwischenraum zwischen dem Fangelement 7 und einem unterhalb des Längsträgerabschnitts 12 befindlichen, unteren Teil 48 des Querträgerabschnitts 11, hier als "dritter Zwischenraum 46" bezeichnet, so bemessen, dass ein Tier, für das das Selbstfanggitter 1 ausgelegt ist, seinen Kopf nicht hindurch stecken kann, was durch die unteren Wandabschnittsbereiche 16 der Wandabschnitte 23 erreicht wird. Dies gilt insbesondere auch für eine Schwenkstellung eines Fangelements 7, wie sie im mittleren Futterplatz 2 von Fig. 1 veranschaulicht ist.

Die Erfindung stellt ein Selbstfanggitter für Tiere, insbesondere ein Futtergitter für Rinder, zur Verfügung, das gegenüber herkömmlichen Selbstfanggittern zahlreiche Vorteile hat. So ist das in Form eines Schalenbauteils ausgebildete Fangelement 7 des Selbstfanggitters 1 in technisch einfacher Weise und besonders kostengünstig in der industriellen Serienfertigung herstellbar. Es kann aus einem vorgeformten Rohteil 13 beispielsweise aus Stahlblech durch Biegen herstellt werden, wobei die einander gegenüberliegenden flächigen Wandabschnitte 23 eines jeden Fangelements 7 so gestaltet sind, dass ein Tier seinen Kopf nicht durch Zwischenräume 45, 46 zwischen dem Fangelement 7 und dem Träger 10 hindurch stecken kann. Entsprechendes gilt für einen Zwischenraum 44 zwischen dem Träger 10 und einem dem Träger 10 benachbarten Querholm 5 des Selbstfanggitters. Tiere vermögen somit ausschließlich durch die Fressöffnungen 35 ihren Kopf hindurch zu stecken. An den beiden Wandabschnitten 23 der Fangelemente 7 kann in technisch einfacher Weise ein Schwenklager für die beiden Verriegelungsklappen 26, 38 bereitgestellt werden. Gleichermaßen werden die Ausnehmungen 34 mittels auf die Betätigungsstange 30 aufschiebbare Hülsen 32 in technisch einfacher Weise und kostengünstig bereitgestellt. Die den Fangelementen 7 jeweils zugeordneten Verriegelungseinrichtungen 39 können mit relativ geringem Aufwand realisiert werden. Da die beiden oberen Vorsprünge 20 den oberen Längsholm 3 und die beiden unteren Vorsprünge 21 den unteren Längsholm 4 jeweils seitlich umgreifen, können an den Fangelementen 7 von den Tieren ausgeübte Kräfte effektiv in die beiden Längsholme 3, 4 eingeleitet werden, so dass die Fangelemente 7 zuverlässig und sicher an den Trägern 10 gehalten sind. In entsprechender Weise können die Schwenklager 9 der Fangelemente 7 schwächer ausgelegt werden, was zu einer Kostenminderung beiträgt. Durch den gerundeten Randabschnitt 22 der gebogenen Fangelemente 7 werden Verletzungen der Tiere durch scharfe Kanten oder Ränder vermieden. Eine Einzelarretierung der Fangelemente 7 kann in einfacher Weise durch Fixierelemente erreicht werden, zu welchem Zweck Stifte oder Klemmkeile eingesetzt werden können.

### Bezugszeichenliste

- 1: Selbstfanggitter
- 2: Futterplatz
- 3: oberer Längsholm
- 4: unterer Längsholm
- 5: Querholm
- 6: Fangeinrichtung
- 7: Fangelement
- 8: erste Schwenkachse
- 9: Schwenklager
- 10: Träger
- 11: Querträgerabschnitt
- 12: Längsträgerabschnitt
- 13: Rohteil
- 14: Mittelachse
- 15: oberer Wandabschnittsbereich
- 16: unterer Wandabschnittsbereich
- 17: Einsenkung
- 18: obere Aussparung
- 19: untere Aussparung
- 20: oberer Vorsprung
- 21: unterer Vorsprung
- 22: Randabschnitt
- 23: Wandabschnitt
- 24: Mittelabschnitt
- 25: erster Schwenkbolzen
- 26: erste Verriegelungsklappe
- 27: zweiter Schwenkbolzen
- 28: zweite Schwenkachse
- 29: Betätigungselement
- 30: Betätigungsstange
- 31: Lagerring
- 32: Hülse
- 33: Befestigungsschraube
- 34: Ausnehmung
- 35: Fressöffnung
- 36: erste Rastfläche
- 37: zweite Rastfläche
- 38: zweite Verriegelungsklappe
- 39: Verriegelungseinrichtung
- 40: erstes Klappenende
- 41: zweites Klappenende
- 42: erste Bohrung
- 43: zweite Bohrung
- 44: erster Zwischenraum
- 45: zweiter Zwischenraum
- 46: dritter Zwischenraum
- 47: oberer Teil
- 48: unterer Teil

## Patentansprüche

1. Selbstfanggitter (1) für Tiere, mit einer Mehrzahl Fressöffnungen (35), die jeweils durch ein erstes feststehendes Gitterelement (5) und ein an einem zweiten feststehenden Gitterelement (10) schwenkbar angebrachten Fangelement (7) begrenzt sind, wobei die Fangelemente (7) jeweils durch eine Verriegelungseinrichtung (39) in einer Fangposition verriegelbar sind, **dadurch gekennzeichnet, dass** jedes Fangelement (7) zumindest einen in der Ebene des Selbstfanggitters (1) angeordneten flächigen Wandabschnitt (23) umfasst, der so bemessen ist, dass zwischen dem Fangelement (7) und dem zweiten feststehenden Gitterelement (10) geformte Zwischenräume (45, 46) in jeder Schwenkposition des Fangelements (7) es nicht ermöglichen, dass ein Tier, für welches das Selbstfanggitter (1) ausgelegt ist, seinen Kopf hindurch stecken kann.

2. Selbstfanggitter (1) nach Anspruch 1,
**dadurch gekennzeichnet, dass** die Fangelemente (7) jeweils zwei in Gegenüberstellung angeordnete Wandabschnitte (23) umfassen, die durch einen gerundeten Randabschnitt (22) miteinander verbunden sind.

3. Selbstfanggitter (1) nach Anspruch 2,
**dadurch gekennzeichnet, dass** die Fangelemente (7) jeweils aus einem flachen Rohteil (13), insbesondere durch Verbiegen, hergestellt sind.

4. Selbstfanggitter (1) nach einem der Ansprüche 1 bis 3, **dadurch gekennzeichnet, dass** die zweiten feststehenden Gitterelemente (10) jeweils in Form eines T-Trägers ausgebildet sind, wobei der T-Träger einen zwischen zwei Längsholmen (3, 4) sich erstreckenden Querträgerabschnitt (11) und einen davon senkrecht abstehenden Längsträgerabschnitt (12) umfasst, wobei das Fangelement (7) an einem freien Ende des Längsträgerabschnitts (12) schwenkbar angebracht ist.

5. Selbstfanggitter (1) nach Anspruch 4,
**dadurch gekennzeichnet, dass** der wenigstens eine flächige Wandabschnitt (23) eines Fangelements mit zwei zumindest annähernd dreieckförmigen Wandabschnittsbereichen (15, 16) versehen ist, die beiderseits einer Schwenkachse (8) zum Verschwenken des Fangelements (7) angeordnet sind.

6. Selbstfanggitter (1) nach einem der Ansprüche 1 bis 5, **dadurch gekennzeichnet, dass** jede Verriegelungseinrichtung (39) zur Verriegelung eines Fangelements (7) in Fangposition zwei Verriegelungsklappen (26, 38) aufweist, die mit zwei jeweils zugeordneten Rastflächen (36, 37) so zusammenwirken können, dass ein beiderseitiges Verschwenken des Fangelements (7) blockiert ist.

7. Selbstfanggitter (1) nach Anspruch 6, **dadurch gekennzeichnet, dass** die den Verriegelungsklappen (26, 38) zugeordneten Rastflächen (36, 37) von einem um seine Längsachse drehbar gelagerten und in wenigstens zwei Winkelstellungen feststellbaren, länglichen Betätigungselement (29) geformt sind.

8. Selbstfanggitter (1) nach Anspruch 7, **dadurch gekennzeichnet, dass** das Betätigungselement (29) eine drehbar gelagerte Betätigungsstange (30) mit einer Mehrzahl Anbauteile (32) umfasst, wobei die den Verriegelungsklappen (26, 38) zugeordneten Rastflächen (36, 37) von Ausnehmungen (34) der Anbauteile (32) geformt sind.

9. Selbstfanggitter (1) nach einem der Ansprüche 6 bis 8, **dadurch gekennzeichnet, dass** die beiden Verriegelungsklappen (26, 38) einer jeden Verriegelungseinrichtung (39) an dem zumindest einen flächigen Wandabschnitt (23) des zugehörigen Fangelements (7) schwenkbar angebracht sind.

10. Selbstfanggitter (1) nach einem der Ansprüche 7 bis 9, **dadurch gekennzeichnet, dass** jeweilige Lagerelemente (31) zur drehbaren Lagerung des Betätigungselements (29) so angeordnet sind, dass die Verriegelungsklappen (26, 38) einer jeden Verriegelungseinrichtung (39) an benachbarten Lagerelementen (31) derart zur Anlage gelangen, dass eine beiderseitige Schwenkbewegung des zugehörigen Fangelements (7) begrenzt ist.

11. Selbstfanggitter (1) nach einem der Ansprüche 2 bis 9, **dadurch gekennzeichnet, dass** die beiden flächigen Wandabschnitte (23) eines jeden Fangelements (7) sowohl einen oberen Längsholm (3) als auch einen unteren Längsholm (4) des Selbstfanggitters (1) umgreifen.

12. Selbstfanggitter (1) nach einem der Ansprüche 1 bis 9, **gekennzeichnet durch** eine den Fangelementen (7) jeweils zugeordnete Einrichtung (42, 43) zur Einzelverriegelung des Fangelements.

## Geänderte Patentansprüche

### Geänderte Patentansprüche gemäss Regel 137(2) EPÜ.

**1.** Selbstfanggitter (1) für Tiere, mit einer Mehrzahl Fressöffnungen (35), die jeweils durch ein erstes feststehendes Gitterelement (5) und ein an einem zweiten feststehenden Gitterelement (10) schwenkbar angebrachten Fangelement (7) begrenzt sind, wobei die Fangelemente (7) jeweils durch eine Verriegelungseinrichtung (39) in einer Fangposition verriegelbar sind, wobei jedes Fangelement (7) zumindest einen in der Ebene des Selbstfanggitters (1) angeordneten flächigen Wandabschnitt (23) umfasst, der so bemessen ist, dass zwischen dem Fangelement (7) und dem zweiten feststehenden Gitterelement (10) geformte Zwischenräume (45, 46) in jeder Schwenkposition des Fangelements (7) es nicht ermöglichen, dass ein Tier, für welches das Selbstfanggitter (1) ausgelegt ist, seinen Kopf hindurch stecken kann, **dadurch gekennzeichnet, dass** die Fangelemente (7) jeweils als einstückiges Schalenbauteil ausgebildet sind und zwei in Gegenüberstellung angeordnete flächige Wandabschnitte (23) umfassen, die durch einen gerundeten Randabschnitt (22) miteinander verbunden sind, wobei die beiden Wandabschnitte (23) eines jeden Fangelements (7) sowohl einen oberen Längsholm (3) als auch einen unteren Längsholm (4) des Selbstfanggitters (1) umgreifen.

**2.** Selbstfanggitter (1) nach Anspruch 1,
**dadurch gekennzeichnet, dass** die Fangelemente (7) jeweils aus einem flachen Rohteil (13), insbesondere durch Verbiegen, hergestellt sind.

**3.** Selbstfanggitter (1) nach einem der Ansprüche 1 bis 2, **dadurch gekennzeichnet, dass** die zweiten feststehenden Gitterelemente (10) jeweils in Form eines T-Trägers ausgebildet sind, wobei der T-Träger einen zwischen zwei Längsholmen (3, 4) sich erstreckenden Querträgerabschnitt (11) und einen davon senkrecht abstehenden Längsträgerabschnitt (12) umfasst, wobei das Fangelement (7) an einem freien Ende des Längsträgerabschnitts (12) schwenkbar angebracht ist.

**4.** Selbstfanggitter (1) nach einem der Ansprüche 1 bis 3, **dadurch gekennzeichnet, dass** die beiden flächigen Wandabschnitte (23) eines Fangelements jeweils mit zwei zumindest annähernd dreieckförmigen Wandabschnittsbereichen (15, 16) versehen sind, die beiderseits einer Schwenkachse (8) zum Verschwenken des Fangelements (7) angeordnet sind.

**5.** Selbstfanggitter (1) nach einem der Ansprüche 1 bis 4, **dadurch gekennzeichnet, dass** jede Verriegelungseinrichtung (39) zur Verriegelung eines Fangelements (7) in Fangposition zwei Verriegelungsklappen (26, 38) aufweist, die mit zwei jeweils zugeordneten Rastflächen (36, 37) so zusammenwirken können, dass ein beiderseitiges Verschwenken des Fangelements (7) blockiert ist.

**6.** Selbstfanggitter (1) nach Anspruch 5, **dadurch gekennzeichnet, dass** die den Verriegelungsklappen (26, 38) zugeordneten Rastflächen (36, 37) von einem um seine Längsachse drehbar gelagerten und in wenigstens zwei Winkelstellungen feststellbaren, länglichen Betätigungselement (29) geformt sind.

**7.** Selbstfanggitter (1) nach Anspruch 6, **dadurch gekennzeichnet, dass** das Betätigungselement (29) eine drehbar gelagerte Betätigungsstange (30) mit einer Mehrzahl Anbauteile (32) umfasst, wobei die den Verriegelungsklappen (26, 38) zugeordneten Rastflächen (36, 37) von Ausnehmungen (34) der Anbauteile (32) geformt sind.

**8.** Selbstfanggitter (1) nach einem der Ansprüche 5 bis 7, **dadurch gekennzeichnet, dass** die beiden Verriegelungsklappen (26, 38) einer jeden Verriegelungseinrichtung (39) an dem zumindest einen flächigen Wandabschnitt (23) des zugehörigen Fangelements (7) schwenkbar angebracht sind.

**9.** Selbstfanggitter (1) nach einem der Ansprüche 5 bis 8, **dadurch gekennzeichnet, dass** jeweilige Lagerelemente (31) zur drehbaren Lagerung des Betätigungselements (29) so angeordnet sind, dass die Verriegelungsklappen (26, 38) einer jeden Verriegelungseinrichtung (39) an benachbarten Lagerelementen (31) derart zur Anlage gelangen, dass eine beiderseitige Schwenkbewegung des zugehörigen Fangelements (7) begrenzt ist.

**10.** Selbstfanggitter (1) nach einem der Ansprüche 1 bis 9, **gekennzeichnet durch** eine den Fangelementen (7) jeweils zugeordnete Einrichtung (42, 43) zur Einzelverriegelung des Fangelements.
